Europäisches Patentamt

(19) European Patent Office

Office européen des brevets

(11) Numéro de publication: **0 002 969**
**B1**

(12) **FASCICULE DE BREVET EUROPEEN**

(45) Date de publication du fascicule de brevet:
**07.01.81**

(51) Int. Cl.³: **F 02 B 27/00,** F 02 B 33/44,
F 16 L 19/00

(21) Numéro de dépôt: **78400214.9**

(22) Date de dépôt: **06.12.78**

(54) Perfectionnement aux moteurs à combustion interne à deux temps.

(30) Priorité: **23.12.77 FR 7739016**

(43) Date de publication de la demande:
**11.07.79 Bulletin 79/14**

(45) Mention de la délivrance du brevet:
**07.01.81 Bulletin 81/1**

(84) Etats contractants désignés:
**BE CH DE GB IT NL**

(56) Documents cités:
**DE-C-809 265**
**FR-A-2 327 416**

(73) Titulaire: **ATELIERS DE LA MOTOBECANE, 16, rue Lesault, F-93502 Pantin (FR)**

(72) Inventeur: **Jaulmes, Eric, 11, rue du Bel Air, F-75012 Paris (FR)**

(74) Mandataire: **Maureau, Bernard et al, Cabinet Germain, Maureau et Millet Conseils en Brevets d'Invention 64, rue d'Amsterdam, F-75009 Paris (FR)**

## Perfectionnement aux moteurs à combustion interne à deux temps

La présente invention concerne des perfectionnements apportés aux moteurs à combustion interne à deux temps et notamment à de tels moteurs pour cyclomoteurs.

On sait que les règlementations en vigueur imposent des limitations à ces moteurs. Il est donc indispensable de prévoir des moyens de régulation sur lesquels, dans la mesure du possible, l'utilisateur ne doit pas pouvoir intervenir pour les mettre hors d'action. C'est ainsi que les dispositifs électriques ou centrifuges connus ne sont pas toujours satisfaisants.

On a alors proposé d'utiliser, pour la régulation les phénomènes vibratoires qui se produisent dans les conduits de circulation des gaz. C'est ainsi que l'on a employé la régulation par l'échappement, mais celle-ci ne peut à elle seule suffire sans un grand sacrifice de puissance.

On a aussi proposé, tel que l'enseigne le Brevet français 1 451 532 de la demanderesse, d'utiliser une tubulure d'admission de grande longueur susceptible d'être avec la capacité du carterpompe, le siège de résonnance qui facilite l'introduction des gaz à bas régime tandis qu'à haut régime, l'inertie de la colonne de gaz contenue dans cette tubulure fait effondrer la puissance.

Cette disposition présente toutefois l'inconvénient de comporter de grands risques de givrage qui la rendent pratiquement inutilisable si l'on n'a pas prévu, comme dans le brevet précité, des moyens pour réchauffer cette tubulure d'admission.

Cette disposition présente aussi l'inconvénient de pouvoir être facilement modifiée car, pour réduire la longueur de la tubulure d'admission, il suffit de déplacer le carburateur qu'il est facile de fixer en un point plus rapproché de l'orifice d'admission.

On connait aussi notamment par le Brevet allemand 809 265 des moteurs à combustion interne à deux temps dans lesquels est prévu un canal de transfert constitué par un tube d'admission reliant le carter pompe à la chambre du cylindre sans que ce tube n'ait un rôle à jouer dans la limitation de la puissance du moteur à régime élevé.

La présente invention vise à pallier ces inconvénients. A cet effet, dans un moteur à combustion interne à deux temps, comportant au moins un canal de transfert reliant le carterpompe à la chambre du cylindre, ledit canal de transfert est formé d'un tube résonnant, dont une extrémité est adaptée à un orifice prévu dans le carter et l'autre extrémité est adaptée à un orifice prévu dans le cylindre, ledit tube ayant une longueur telle qu'il soit apte à être le siège de phénomènes vibratoires pour la colonne de gaz qu'il contient.

On peut ainsi obtenir simplement la régulation souhaitée, tout en rendant pratiquement impossible une intervention de l'utilisateur. En effet, à régime élevé les phénomènes vibratoires contrarient le remplissage du cylindre.

Le fait d'utiliser le canal de transfert pour en faire le siège de phénomènes vibratoires permettant de réguler la puissance du moteur, présente le premier avantage que tout risque de givrage est éliminé puisque, d'une part le mélange transféré provient de la chambre située en dessous du piston où il subit un léger échauffement et, d'autre part, l'extrémité avale du canal de transfert est reliée à l'extrémité supérieure très chaude du cylindre.

Un deuxième avantage réside dans l'impossibilité de rapprocher l'un de l'autre les deux orifices auxquels est raccordé le canal de transfert. Pour le raccourcir, on ne peut donc se contenter de sectionner l'une de ses extrémités. Pour cela, il est nécessaire de réaliser entièrement une nouvelle tubulure de transfert ce qui n'est évidemment pas possible si l'on ne dispose pas d'un outillage très élaboré.

Les lois de l'acoustique déterminent, en fonction des paramètres du moteur, les caractéristiques optimales de ce tube de transfert.

C'est ainsi que ce tube est de préférence à section circulaire de diamètre constant. De préférence également, la longueur dudit tube est au moins égale à quatre fois son diamètre, sinon l'onde ne serait plus dirigée. En fait, on choisira généralement une longueur très supérieure, et grande par rapport à la distance du carter aux lumières de transfert du cylindre.

Etant donné que le tube de transfert relie le carter au cylindre, il doit être coudé et avantageusement, le rayon moyen des coudes est au moins égal à deux fois le diamètre du tube.

Par ailleurs, les moteurs de cyclomoteurs sont fréquemment montés pendulairement, soit pour permettre de régler la tension de la courroie d'entrainement primaire, soit parce que le moteur est muni d'un variateur. Pour éviter la présence de points bas susceptibles d'accumuler les condensations on prévoit de préférence que pour toute position du moteur, le point le plus bas du tube soit son extrémité adaptée audit orifice prévu dans le carter.

Selon un mode de réalisation préféré de l'invention les axes des deux extrémités dudit tube sont dans des plans différents et l'une au moins de ces extrémités est simplement en contact avec les bords de l'orifice auquel elle est adaptée.

Cette disposition permet d'assurer la mise en place du tube de transfert après que le carter et le cylindre aient été assemblés. Il suffit alors en effet d'engager une des extrémités du tube dans l'orifice correspondant, ce qui définit un axe, puis de faire pivoter le tube autour de cet axe jusqu'à ce que le plan de l'autre extrémité coïncide avec le plan de la sortie de l'autre orifice, pour que cette autre extrémité soit en contact avec les bords de l'orifice auquel il est adapté.

Avantageusement, cette dernière extrémité est évasée et le bord de l'orifice auquel elle est adaptée forme une lèvre annulaire fileté extérieurement, un écrou fileté intérieurement étant vissé sur ladite lèvre et étant muni d'un épaulement coopérant avec l'évasement de ladite extrémité.

De préférence, l'autre extrémité est engagée dans l'orifice auquel elle est adaptée et y est maintenue par un écrou fileté extérieurement coopérant avec un filetage intérieur dudit orifice et avec une bague conique.

De toute façon l'invention sera bien comprise à l'aide de la description qui suit, donnée à titre d'exemple non limitatif d'une de ses formes de réalisation. Aux dessins schématiques annexés:

la figure 1 est une vue partiellement en coupe d'un moteur selon l'invention dans lequel seul un demi carter a été représenté,

la figure 2 est une vue en coupe selon la ligne II-II de la figure 1,

la figure 3 est une vue en coupe selon la ligne III-III de la figure 1,

la figure 4 est une vue de côté d'un tube de transfert selon l'invention,

la figure 5 représente le mode de fixation d'une des extrémités du tube et

la figure 6 représente le mode de fixation de l'autre extrémité du tube.

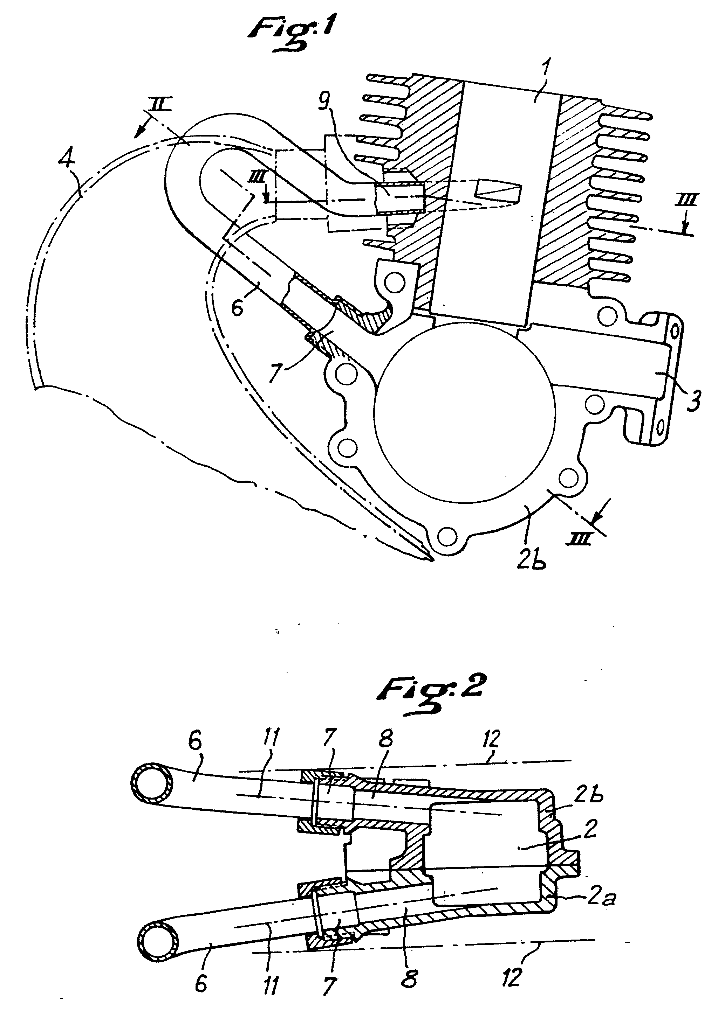

Comme représenté aux dessins, le moteur à deux temps selon l'invention comporte de façon connue un cylindre 1 monté sur un carter 2 composé de deux parties 2a et 2b, seule la partie 2b étant représentée à la figure 1. L'admission des gaz frais se fait dans le carter par l'intermédiaire d'un conduit 3 dans lequel est disposé un clapet d'admission non représenté. L'échappement se fait par l'intermédiaire d'un pot d'échappement 4 adapté à un orifice d'échappement 5 prévu dans la paroi du cylindre.

Deux tubes de transfert 6 permettent de faire communiquer la chambre du carter 2 et la chambre du cylindre 1. A cet effet, les extrémités inférieures de chaque tube 6 sont adaptées à un orifice 7 prévu dans le carter et chaque orifice 7 est relié par un canal 8 à la chambre du carter 2. Les extrémités supérieures de chaque tube 6 sont adaptées à un orifice 9 prévu dans la paroi du cylindre 1 et relié à la chambre du cylindre par des conduits 10. Les conduits 6 sont coudés en 6a et 6b pour relier les orifices 7 et 9 et sont conformés de telle sorte qu'ils ne présentent aucun point bas susceptibles d'accumuler les condensations, même dans le cas d'un mouvement pendulaire du moteur autour d'un axe perpendiculaire au plan de la figure 1.

Les tubes 6 sont conçus de telle sorte qu'il s'y produise des battements acoustiques permettant d'assurer la régulation souhaitée. Pour cela, les tubes 6 sont à section circulaire constante, leur longueur est supérieure à quatre fois le diamètre pour que l'onde soit dirigée et le rayon des coudes 6a et 6b est de l'ordre de deux fois le diamètre. Dans le cas typique d'un moteur actuel de cyclomoteur, les tubes 6 peuvent avoir une longueur de l'ordre de 16 cm, les deux tubes ayant un diamètre intérieur de 10 à 12 mm. D'autre part, on a prévu que les conduits 8 débouchent dans le carter le plus près possible du piston de manière à profiter du choc aérodynamique.

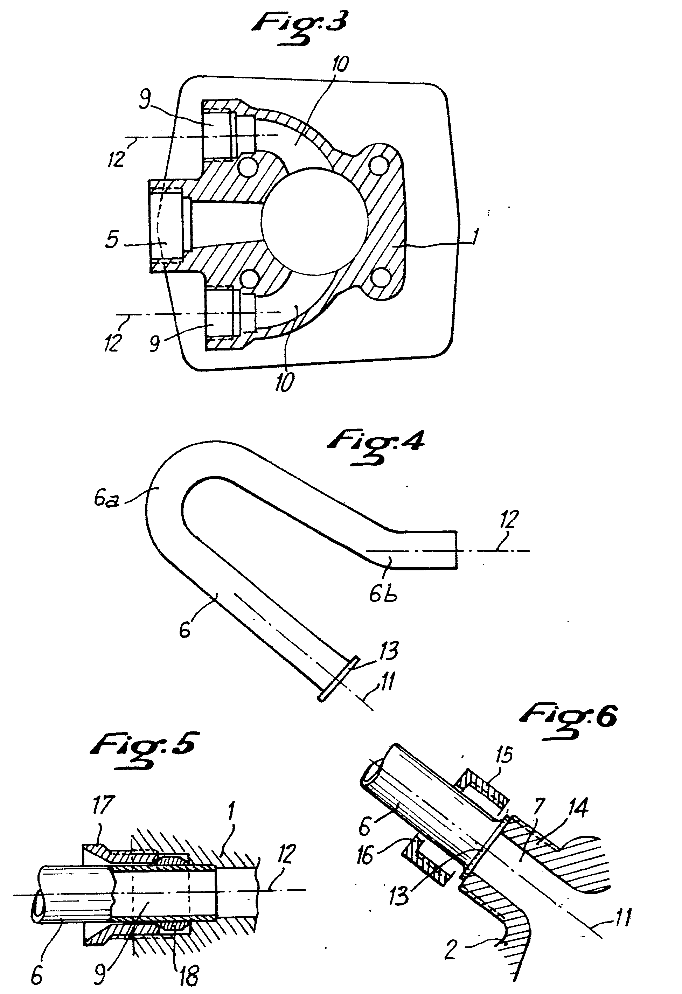

Comme cela est représenté plus particulièrement dans les figures 2, 3 et 4 les axes 11 des orifices 7 et les axes 12 des orifices 9 se trouvent dans des plans différents. Les axes 12 sont parallèles entre eux et de préférence parallèles également à l'axe de l'orifice d'échappement 5, tandis que les axes 11 sont divergents dans la direction des tubes 6. D'autre part, l'extrémité inférieure des tubes 6 est simplement en contact avec l'ouverture de l'orifice 7. Ainsi les tubes 6 peuvent être montés simplement sur l'ensemble constitué par le cylindre 1 et le carter 2 préalablement assemblés. Il suffit pour cela d'engager l'extrémité supérieure des tubes 6 dans les orifices 9, puis de faire pivoter ces tubes autour des axes 12 jusqu'à ce que le plan de sortie de l'extrémité inférieure des tubes vienne en coïncidence avec le plan de sortie de l'orifice 7, les axes de ces sorties étant alors confondus.

Les figures 5 et 6 montrent comment des liaisons des tubes 6 avec le cylindre 1 et le carter 2 peuvent être réalisées pratiquement pour permettre un tel assemblage. L'extrémité inférieure des tubes 6 est évasée comme représenté en 13 et le bord de l'orifice 7 forme une lèvre 14 filetée extérieurement. L'extrémité évasée 13 vient s'appliquer sur le bord de la lèvre 14 et y est maintenue par un écrou 15 fileté intérieurement et muni d'un épaulement 16 qui vient en appui sur l'extrémité évasée 13 du tube 6. L'extrémité supérieure du tube 6 est engagée dans le canal 12 d'un diamètre inférieur à celui de l'orifice 9 qui est fileté intérieurement. Un écrou 17 fileté extérieurement comporte une ouverture centrale à section circulaire dans laquelle passe l'extrémité du tube 6. Cet écrou 17 coopère avec une bague 18 biconique qui enserre le tube 6 et assure son maintien en place.

Dans l'exemple de réalisation représenté aux dessins le moteur selon l'invention comporte deux tubes 6 de transfert débouchant, à leur partie inférieure, chacun dans un des demi-carters et à leur partie supérieure dans la chambre du cylindre de part et d'autre de l'orifice d'échappement 5. Les conduits 10 débouchent dans la chambre du cylindre de façon que les gaz frais soient projetés sensiblement sur la génératrice opposée à l'orifice d'échappement 5 de manière à éviter que ces gaz frais ne se mélangent avec les gaz brûlés et ne s'échappent avec eux.

Comme il va de soi l'invention n'est pas limitée à la forme de réalisation décrite ci-dessus, mais en embrasse au contraire toutes les variantes d'exécution.

**Revendications**

1. Moteur à combustion interne à deux temps, comportant au moins un canal de transfert reliant le carter pompe à la chambre du cylindre, du type dans lequel ledit canal de transfert est formé d'un tube dont une extrémité est adaptée à un orifice prévu dans le carter et l'autre extrémité est adaptée à un orifice prévu dans le cylindre, caractérisé en ce que ledit tube a une longueur telle qu'il est apte à être le siège de phénomènes vibratoires pour la colonne de gaz qu'il contient, ces phénomènes vibratoires étant de nature à provoquer une limitation de la puissance à régime élevé.

2. Moteur selon la revendication 1, caractérisé en ce que ledit tube est à section circulaire de diamètre constant.

3. Moteur selon l'une quelconque des revendications 1 et 2, caractérisé en ce que la longueur dudit tube est au moins égale à quatre fois son diamètre.

4. Moteur selon la revendication 3, caractérisé en ce que la longueur dudit tube est grande par rapport à la distance du carter aux lumières de transfert du cylindre.

5. Moteur selon l'une quelconque des revendications 1 à 4, caractérisé en ce que ledit tube est coudé et en ce que le rayon des coudes est au moins égal à deux fois le diamètre du tube.

6. Moteur selon l'une quelconque des revendications 1 à 5, et agencé pour se déplacer pendulairement, caractérisé en ce que pour toute position du moteur le point le plus bas dudit tube soit son extrémité adaptée audit orifice prévu dans le carter.

7. Moteur selon l'une quelconque des revendications 1 à 6, caractérisé en ce que les axes des deux extrémités dudit tube sont dans des plans différents, l'une au moins de ces extrémités étant simplement en contact avec les bords de l'orifice auquel elle est adaptée.

8. Moteur selon la revendication 7, caractérisé en ce que ladite extrémité est évasée et en ce que le bord de l'orifice auquel elle est adaptée forme une lèvre annulaire filetée extérieurement, un écrou fileté intérieurement étant vissé sur ladite lèvre et étant muni d'un épaulement coopérant avec l'évasement de ladite extrémité.

9. Moteur selon l'une quelconque des revendications 7 et 8, caractérisé en ce que l'autre extrémité est engagée dans l'orifice auquel elle est adaptée, et y est maintenue par un écrou fileté extérieurement coopérant avec un filetage intérieur dudit orifice et avec une bague biconique.

10. Moteur selon l'une quelconque des revendications 1 à 9, caractérisé en ce qu'il comporte deux tubes de transfert.

## Claims

1. A two-cycle internal combustion engine, comprising at least one transfer channel connecting the pump casing to the cylinder chamber, of the type in which said transfer channel is formed of a tube one end of which is adapted to an opening foreseen in the casing and the other end of which is adapted to an opening foreseen in the cylinder, wherein said tube has a length such that it is capable of being the seat of vibratory phenomena for the gas column it contains, said vibratory phenomena being likely to cause a limitation of the power when the engine is running at high speed.

2. An engine according to claim 1, wherein the cross-section of said tube is of constant diameter.

3. An engine according to any one of claims 1 and 2, wherein the length of said tube is at least equal to four times its diameter.

4. An engine according to claim 3, wherein the length of said tube is large relative to the distance from the casing to the transfer ports of the cylinder.

5. An engine according to any one of claims 1 to 4, wherein said tube is curved and the radius of the curves is at least equal to twice the diameter of the tube.

6. An engine according to any one of claims 1 to 5, and arranged for moving pendularly, wherein, for any position of the engine, the lowermost point of said tube is its end adapted to said opening foreseen in the casing.

7. An engine according to any one of claims 1 to 6, wherein the axes of both ends of said tube are in different planes, one at least of said ends being simply in engagement with the edges of the opening to which it is adapted.

8. An engine according to claim 7, wherein said end is flared out and the edge of the opening to which it is adapted forms an annular lip threaded externally, a nut threaded internally being screwed onto said lip and being provided with a shoulder cooperating with the flare of said end.

9. An engine according to any one of claims 7 and 8, wherein the other end is engaged into the opening to which it is adapted, and is maintained therein by a nut threaded externally cooperating with an inner threading of said opening and with a biconical ring.

10. An engine according to any one of claims 1 to 9, characterized in that it comprises two transfer tubes.

## Patentansprüche

1. Zweitaktverbrennungsmotor mit mindestens einem das Kurbelgehäuse mit der Brennkammer des Zylinders verbindenden Übertragungskanal des Typs, bei dem der genannte Übermittlungskanal aus einem Rohr besteht, von dem ein Ende einer Öffnung angepasst ist, die im Kurbelgehäuse vorgesehen ist, und das andere Ende einer im Zylinder vorgesehenen Öffnung, dadurch gekennzeichnet, dass diese Rohrleitung eine solche Länge hat, dass sie geeignet ist, Vibrationsphänomene für die sich dort befindende Gassäule aufzunehmen, wobei diese Vibrationsphänomene geeignet sind, bei hoher Drehzahl eine Leistungsbegrenzung zu bewirken.

2. Zweitaktverbrennungsmotor nach Anspruch 1, dadurch gekennzeichnet, dass das genannte Rohr Kreisquerschnitt mit gleichbleibendem Durchmesser hat.

3. Zweitaktverbrennungsmotor nach Anspruch 1 oder 2, dadurch gekennzeichnet, dass die Länge des genannten Rohrs mindestens dem vierfachen Durchmesser entspricht.

4. Zweitaktverbrennungsmotor nach Anspruch 3, dadurch gekennzeichnet, dass die Länge des genannten Rohrs gross gegen den Abstand des Gehäuses von den Überströmschlitzen des Zylinders ist.

5. Zweitaktverbrennungsmotor nach einem der Ansprüche 1 bis 4, dadurch gekennzeichnet, dass das genannte Rohr gekrümmt ist, und dass der Biegeradius mindestens gleich dem zweifachen Rohrdurchmesser ist.

6. Zweitaktverbrennungsmotor nach einem der Ansprüche 1 bis 5 in Pendelaufhängung, dadurch gekennzeichnet, dass das Rohrende, das der genannten Öffnung in dem Gehäuse angepasst ist, bei jeder Motorlage den tiefsten Punkt des Rohrs darstellt.

7. Zweitaktverbrennungsmotor nach einem der Ansprüche 1 bis 6, dadurch gekennzeichnet, dass die Achsen der beiden Enden des genannten Rohrs in verschiedenen Ebenen liegen, und dass mindestens eines dieser Enden einfach an den Rändern der Öffnung, der es angepasst ist, anliegt.

8. Zweitaktverbrennungsmotor nach Anspruch 7, dadurch gekennzeichnet, dass das genannte Ende aufgeweitet ist, und dass der Rand der Öffnung, der es angepasst ist, eine ringförmige Lippe mit Aussengewinde darstellt, während eine Mutter mit Innengewinde über die genannte Lippe geschraubt ist und ein Schulterteil besitzt, das mit der Aufweitung des genannten Endes zusammenwirkt.

9. Zweitaktverbrennungsmotor nach Anspruch 7 oder 8, dadurch gekennzeichnet, dass das andere Ende in die Öffnung, der es angepasst ist, eingreift und dort durch eine Mutter mit Aussengewinde gehalten wird, das mit einem Innengewinde der genannten Öffnung und mit einem Doppelkegelring zusammenwirkt.

10. Zweitaktverbrennungsmotor nach einem der Ansprüche 1 bis 9, dadurch gekennzeichnet, dass zwei Überströmkanäle vorgesehen sind.

0 002 969

*Fig. 1*

*Fig. 2*

7

*Fig:3*

*Fig:4*

*Fig:5*

*Fig:6*